# EUROPÄISCHE PATENTSCHRIFT

(11) **EP 0 943 393 B1**
(45) Veröffentlichungstag und Bekanntmachung des Hinweises auf die Patenterteilung: **09.10.2002**
(21) Anmeldenummer: 99102890.3
(22) Anmeldetag: 04.03.1999
(51) Int. Cl.: B23P 19/00, B25B 23/04, B25B 23/06, B21J 15/32

(54) **Montiervorrichtung für Bauteile**
Assembling device for parts
Dispositif d' assemblage des éléments

(30) Priorität: 19.03.1998 DE 19812085
(43) Veröffentlichungstag der Anmeldung: 22.09.1999
(73) Patentinhaber: EJOT VERBINDUNGSTECHNIK GmbH & Co. KG, D-57334 Bad Laasphe (DE)
(72) Erfinder: Hoof, Gerhard-Helmut, 57334 Bad Laasphe (DE)
(74) Vertreter: Bardehle, Heinz, Dipl.-Ing.

(56) Entgegenhaltungen:
- DE-A- 19 609 456
- US-A- 4 528 874
- US-A- 5 207 085
- US-A- 5 351 392

## Beschreibung

Die Erfindung bezieht sich auf eine Vorrichtung zum Fördern und Montieren von in ein Werkstück einzusetzenden Bauteilen.

Eine derartige Vorrichtung ist aus der US-PS 2,344,127 bekannt. Mit dieser Vorrichtung werden Blindniete verarbeitet, die in einer Schiene hintereinander aufgehängt sind und in der Schiene durch eine Federspannung in Richtung auf das Ende der Schiene gedrängt werden. Am Ende der Schiene ist ein Mechanismus vorgesehen, der ihre hier vorhandene Öffnung verschließt und jeweils nur die Abnahme eines einzigen Blindniets erlaubt. Diese Abnahme erfolgt mittels eines an einem Setzwerkzeug angebrachten Hebels, der um eine Achse verschwenkbar an dem Setzwerkzeug gelagert ist. Der Hebel wird zur Abnahme eines vor der Öffnung der Schiene hängenden Blindniets an diese Öffnung herangeschwenkt, wobei der Hebel einen einzigen Blindniet erfassen und diesen in eine Lage schwenken kann, in der der Blindniet im Setzwerkzeug eingesetzt ist. Die Schiene ist am Setzwerkzeug seitlich angebracht und bildet somit eine einheitliche Vorrichtung zusammen mit dem Setzwerkzeug. Der für die Abnahme eines Blindniets bei gleichzeitiger Entriegelung der Schiene notwendige Mechanismus ist kompliziert aufgebaut und an dem Setzwerkzeug von außen frei zugänglich angebracht, so dass bei unachtsamer Handhabung der Abnahmemechanismus leicht beschädigt werden kann. Außerdem handelt es sich dabei um eine relativ komplizierte Konstruktion.

Eine andere Vorrichtung zum Montieren von Bauteilen, nämlich Blindnieten, ist aus der US-PS 5,351,392 bekannt. Zur Verarbeitung der Blindnieten werden diese nebeneinander auf einem flexiblen Streifen gehalten, der in der Vorrichtung gefördert wird. Der Streifen wird durch eine Schiene geleitet, die fest an der Vorrichtung angebracht ist. Der jeweils letzte Niet auf dem Streifen wird von einem neben der Schiene eine Rotationsbewegung ausführenden Greifer entfernt. Aufgrund der Rotationsbewegung des Greifers gelangt dann der ergriffene Niet in eine Position zum Setzen des Blindnietes.

Der Erfindung liegt die Aufgabe zugrunde, eine Vorrichtung zum Fördern und Montieren von in ein Werkstück einzusetzenden Bauteilen zu schaffen, die robust aufgebaut und in kompakter Bauweise mit wenigen Teilen ausgestattet ist. Erfindungsgemäß geschieht dies dadurch, dass in der Vorrichtung die Bauteile in einer als Magazin dienenden Schiene geführt sind, die an ihrem einen Ende für die Abnahme eines Bauteils eine Öffnung aufweist, wobei die Öffnung in ein über ein Gelenk mit der Schiene verbundenes und mit dieser fluchtendes Aufnahmeteil für ein einziges Bauteil übergeht und die Schiene mit dem Aufnahmeteil längsverschiebbar in einer Führung gelagert ist, in der das Aufnahmeteil zur Aufnahme eines Bauteils in zurückgeschobener Position der Schiene in mit der Schiene fluchtender Aufnahmeposition gehalten ist, wobei das Aufnahmeteil so angeordnet ist, dass beim Vorschieben der Schiene das Aufnahmeteil mit dem Bauteil aus der Führung herausragt und durch das Gelenk um etwa 90° in eine Ausstoßposition abknickt, in der das Bauteil für seine Montage durch einen neben der Führung angeordneten Stößel aus dem Aufnahmeteil ausstoßbar und in einem Werkstück montierbar ist.

Das mit der Schiene in fluchtender Aufnahmeposition gehaltene Aufnahmeteil wirkt in der zurückgeschobenen Position der Schiene wie ein Bestandteil der Schiene, aus der das Aufnahmeteil beim Vorschieben der Schiene lediglich abzuknicken hat, um in die Ausstoßposition zusammen mit einem Bauteil zu gelangen. Die Beweglichkeit der Aufnahmeteils gegenüber der Schiene wird dabei durch das Gelenk gewährleistet, über dass das Aufnahmeteil mit der Schiene verbunden ist, wobei es sich um einfach gestaltete Bauteile handelt. Die Konstruktion der Vorrichtung bildet dabei eine geschlossene Anordnung, von der in der Ausstoßposition lediglich das relativ kurze Aufnahmeteil abgeknickt ist, womit die gesamte Vorrichtung vor Beschädigungen gesichert ausgebildet ist.

Um dem Aufnahmeteil ein Bauteil zuzuführen, sieht man an der Schiene zweckmäßig einen Anschlag vor, der nach erfolgtem Montieren eines Bauteils die Bauteile in der Schiene bei deren Zurückschieben aufhält und diese in Richtung zur Öffnung der Schiene drückt, wobei das Aufnahmeteil aus der Ausstoßposition in seine mit der Schiene fluchtende Aufnahmeposition durch ein an der Öffnung angebrachtes Umlenkteil zurückgeschwenkt wird, so daß unter der Wirkung des Anschlags das vorderste in der Schiene geführte Bauteil in das Aufnahmeteil gleitet, wobei das Umlenkteil beim Vorschieben der Schiene das Abknicken des Aufnahmeteils in die Ausstoßposition lenkt. Das Umlenkteil, das z.B. durch eine am Ende der Schiene angebrachte Abrundung gebildet sein kann, ist ein einfach gestaltetes Konstruktionsteil, das lediglich beim Vorschieben und Zurückschieben der Schiene die Bewegung des Aufnahmeteils aus der Aufnahmeposition in die Ausstoßposition und zurück zu steuern hat.

Um bei der Handhabung der Vorrichtung den Bauteilen in der Schiene eine Sicherung zu geben, die insbesondere ein Herausfallen der Bauteile verhindert, führt man die Bauteile zweckmäßig in seitlichen Längsnuten in der Schiene, in die Vorsprünge der Bauteile passen.

Um das in der Ausstoßposition vom Aufnahmeteil geführte Bauteil bei der Handhabung der Vorrichtung gegen Herausfallen zu sichern, sieht man für das Halten des Bauteils in der Ausstoßposition zweckmäßig Klemmittel am Aufnahmeteil vor. Es ist aber auch möglich, diese Haltefunktion dem Bauteil selbst zu geben, indem man entsprechende Klemmittel am Bauteil vorsieht.

An der Führung wird zweckmäßig eine Arretierungseinrichtung angeordnet, die das Aufnahmeteil in der Ausstoßposition lösbar festhält. Wenn dann die Vorrichtung mit in der Ausstoßposition befindlichem Aufnahmeteil irgendwie gegenüber einem Werkstück bewegt, insbesondere in eine Vertikalposition geführt und darin gehalten wird, hält die Arretierungseinrichtung das Aufnahmeteil in seiner Ausstoßposition fest, so daß es sich unter dem Einfluß der Schwerkraft nicht verschwenken kann. Für die Arretierungseinrichtung kann man einen Magneten verwenden, der zwar mit seiner relativ geringen Kraft das Aufnahmeteil in der Ausstoßposition hält, jedoch das Aufnahmeteil beim Zurückziehen der Schiene ohne weiteres freigibt, so daß dieses dabei zurückgeschwenkt und in seine Aufnahmeposition überführt werden kann.

Weiterhin sieht man zweckmäßig im Bereich des Aufnahmeteils und des Umlenkteils einen Magneten vor, der das Aufnahmeteil gegen das Umlenkteil zieht. Ein solcher Magnet macht die Bewegung des Aufnahmeteils unabhängig von der Wirkung der Schwerkraft, da durch den Magneten das Aufnahmeteil bei seinem Abknicken gegenüber der Schiene von der Kraft des Magneten in die abgeknickte Ausstoßposition gezogen wird, was gegebenenfalls bei einer entsprechenden Handhabung der Vorrichtung gegen die Schwerkraft wirken muß. Durch diese Gestaltung wird also die Vorrichtung von der Wirkung der Schwerkraft unabhängig gemacht und kann daher in jeder beliebigen Lage auf ein zu bestückendes Werkstück zubewegt werden.

In den Figuren ist ein Ausführungsbeispiel der Erfindung dargestellt. Es zeigen
- Fig. 1: die vollgeladene Vorrichtung in Seitensicht,
- Fig. 2: die gleiche Vorrichtung in Draufsicht,
- Fig. 3: die Vorrichtung in Aufnahmeposition,
- Fig. 4: die Vorrichtung mit teilweise vorgeschobener Schiene,
- Fig. 5: die Vorrichtung mit in Ausstoßposition befindlichem Aufnahmeteil,
- Fig. 6: die Vorrichtung gemäß Fig. 5 mit ausgestoßenem und in ein Werkstück eingesetztem Bauteil,
- Fig. 7: die Schiene in teilweise zurückgezogener Lage mit leerem Aufnahmeteil
- Fig. 8: die Vorrichtung mit um ein Bauteil verringerter Anzahl der Bauteile,
- Fig. 9: einen Schnitt durch die Schiene längs der Linie IX-IX gemäß Fig. 3,
- Fig. 10: einen Schnitt durch das Aufnahmeteil mit daran befindlichem Bauteil längs der Linie X-X gemäß Fig. 3.
- Fig. 11: eine Darstellung entsprechend Fig. 10 mit einem mit Klemmittelen versehenen Bauteil.

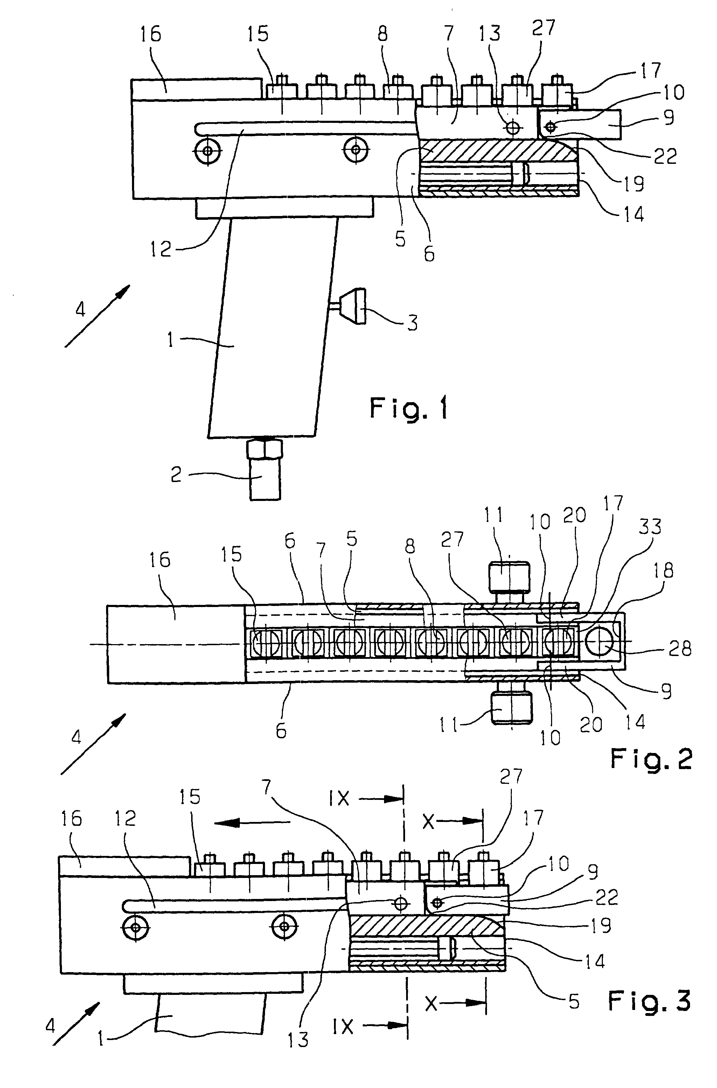

In den Figuren 1 und 2 ist die Vorrichtung zum Fördern und Montieren von Bauteilen 8 dargestellt, die zum Zwecke einer günstigen Handhabung mit dem Handgriff 1 versehen ist, in den ein Zuführkanal 2 mündet, der zur Zuführung zum Beispiel von elektrischer oder pneumatischer Energie dient. An dem Handgriff 1 ist der Knopf 3 angebracht, bei dessen Betätigung in üblicher Weise die in dem Gehäuse 4 untergebrachten Bauteile in Tätigkeit gesetzt werden.

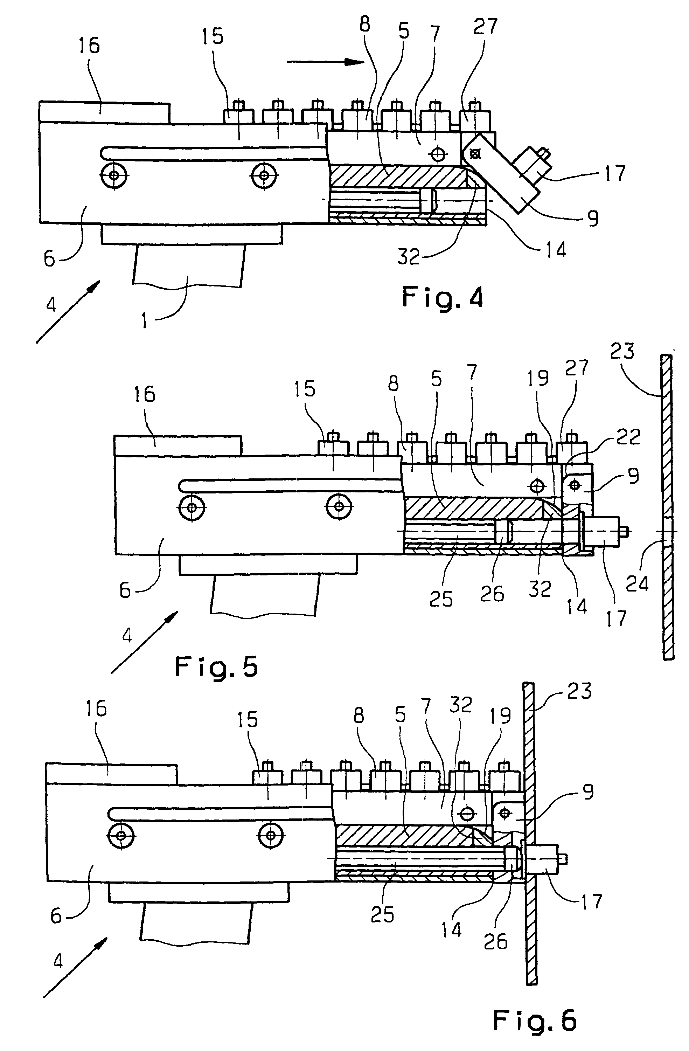

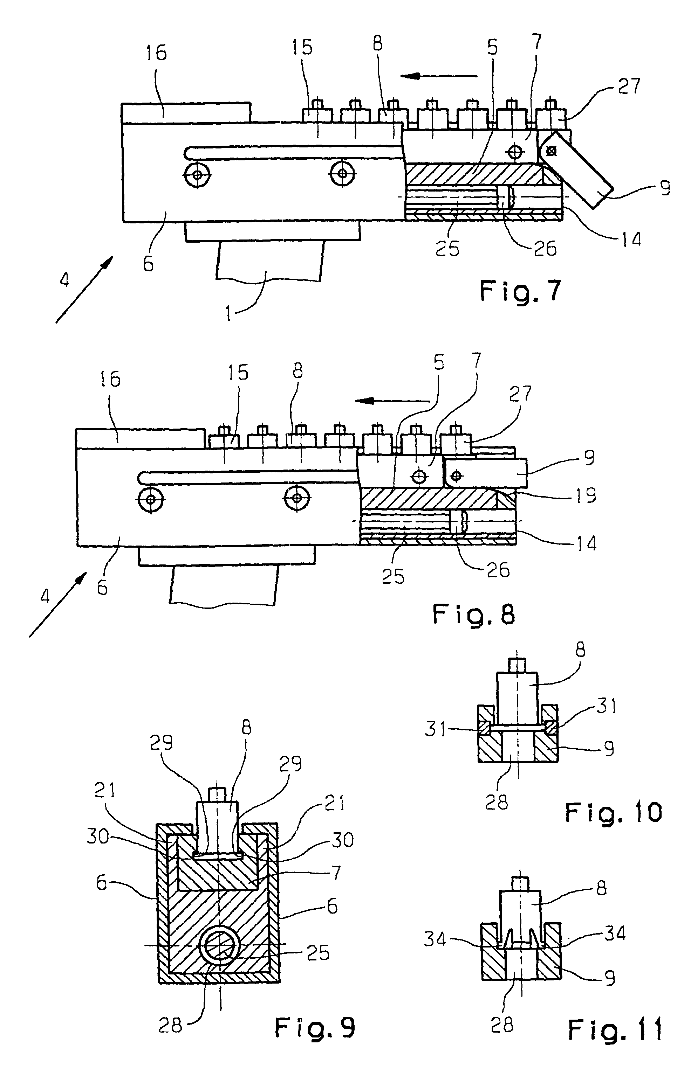

In dem Gehäuse 4 ist die Führung 5 untergebracht, die seitlich von den Seitenwänden 6 eingeschlossen ist. In der Führung 5 ist die Schiene 7 gelagert, die längsverschiebbar von der Führung 5 getragen wird (siehe auch Figur 9). Die als Magazin dienende Schiene 7 trägt hier acht Bauteile 8, bei denen es sich um Kunststoffeinsätze handelt, die in ein Werkstück einzusetzen sind (siehe hierzu Figuren 5 und 6). Andersartige Bauteile können natürlich auch verarbeitet werden. An dem rechten Ende der Schiene 7 ist das Aufnahmeteil 9 drehbar angelenkt, und zwar über das Gelenk 10, von dem in Figur 1 lediglich die Achse dargestellt ist. Das Aufnahmeteil 9 ist in den Figuren 1 und 2 in mit der Schiene 7 fluchtender Lage dargestellt, bei der es sich um die Aufnahmeposition des Aufnahmeteils 9 handelt. In dieser Aufnahmeposition steht das Aufnahmeteil 9 für die Aufnahme eines Bauteils 8 bereit.

Die von der Führung 5 längsverschiebbar getragene Schiene 7 läßt sich mittels der Griffe 11 (siehe Figur 2) verschieben, die durch Langlöcher 12 in den Seitenwänden 6 hindurchgreifen und an der Schiene 7 an der Befestigungsstelle 13 befestigt sind.

Um das Aufnahmeteil 9 mit einem Bauteil 8 zu laden, werden die Griffe 11 nach links hin gegenüber dem Ende 14 der Seitenwände 6 bzw. der Führung 5 verschoben (siehe Pfeil in Fig. 3), wobei die von der Schiene 7 getragenen Bauteile 8 mitgenommen werden, bis das erste Bauteil 15 gegen den Anschlag 16 stößt, der die Seitenwände 6 überbrückend an dem Gehäuse 4 angebracht ist. Durch den Anschlag 16 wird das Bauteil 15 und damit die rechts daneben angeordneten Bauteile 8 festgehalten, so daß sich die Schiene 7 unter ihnen nach links verschiebt, wobei auf Grund der mit der Schiene 7 fluchtenden Lage des Aufnahmeteils 9 das vorderste Bauteil 17 durch die Öffnung 33 (siehe Figur 2) der Schiene 7 in das Aufnahmeteil 9 geschoben wird. Dabei gelangt das vorletzte Bauteil 27 in die Position des in Figur 1 gezeichneten Bauteils 17, daß, wie die Figur 3 zeigt, schließlich bis an die Stirnwand 18 (siehe Figur 2) geschoben wird. Das Aufnahmeteil 9 ist damit mit einem Bauteil, und zwar mit dem Bauteil 17, beladen. Diese Position ist in der Figur 3 dargestellt.

Bei der vorstehend beschriebenen Handhabung wird das Aufnahmeteil 9 in seiner mit der Schiene 7 fluchtenden Lage ständig gehalten, und zwar dadurch, daß sowohl Schiene 7 als auch Aufnahmeteil 9 sich gegenüber der Führung 5 abstützen. Nachdem die Bauteile 8 in der vorstehend beschriebenen Weise in Richtung Stirnwand 18 des Aufnahmeteils verschoben worden sind, wobei sich schließlich das Bauteil 17 in der in Figur 3 dargestellten Lage befindet, ist die Vorrichtung nunmehr bereit, in ihre Ausstoßposition überführt zu werden. Dies sei nunmehr an Hand der Figuren 4 und 5 beschrieben.

Nachdem die Vorrichtung die in der Figur 3 dargestellte Position eingenommen hat, wird die Schiene 7 durch entsprechendes Verschieben der Griffe 11 in Richtung vom Anschlag 16 weg bewegt (siehe Pfeil in Fig. 4), wobei das Aufnahmeteil 9, das zunächst über das Ende 14 der Seitenwände 6 vorragt (siehe Figuren 1 und 2) weiter vor das genannte Ende 14 geschoben wird, so daß nunmehr das Aufnahmeteil 9 gegenüber der Schiene 7 in eine abgeknickte Lage überführt werden kann. Um dieses Abknicken zu ermöglichen, ist der dem Ende 14 zugewandte Endbereich der Führung 5 mit einer als Umlenkteil wirkenden Rundung 19 versehen, die dem Aufnahmeteil 9 bei dessen Vorrücken ein gleichmäßiges Abknicken gegenüber der Schiene 7 ermöglicht, bis die Schiene 7 schließlich die in der Figur 5 dargestellte Lage erreicht hat, in der das Aufnahmeteil 9 in die Ausstoßposition übergegangen ist. Dabei ist das Aufnahmeteil 9 um 90° gegenüber der Schiene 7 abgeknickt.

Wie sich aus Figur 2 ergibt, enthält das Gelenk 10 für das Abknicken des Aufnahmeteils 9 die beiden Zinken 20 des Aufnahmeteils 9, die zwischen die Seitenwände 6 und die entsprechenden Teile der Führung 7 greifen, womit dem Aufnahmeteil 9 die notwendige Drehbeweglichkeit gegeben ist. Um diese Drehbeweglichkeit zweckmäßig zu gestalten, sind die Zinken 20 auf ihrer der Schiene 7 zugewandten Seite mit der Krümmung 22 versehen.

Wenn sich die Vorrichtung mit dem Aufnahmeteil 9 in der Ausstoßposition befindet (Figur 5), steht das betreffende von dem Aufnahmeteil 9 getragene Bauteil 17 einem Werkstück 23 gegenüber, das mit einer entsprechenden Bohrung 24 versehen ist, in die das Bauteil 17 einzusetzen ist. Durch Handführung der Vorrichtung von der in Figur 5 in die in Figur 6 dargestellte Lage kommt schließlich das Aufnahmeteil 9 zur Anlage an dem Werkstück 23, so daß nunmehr das Bauteil 17 in die Bohrung 24 eingestoßen werden kann. Dies geschieht mittels des Stößels 25, der an seinem rechten Ende das Kopfstück 26 aufweist, das bei der Bewegung des Stößels 25 das Bauteil 17 aus dem Aufnahmeteil 9 ausstößt und in die Bohrung 24 des Werkstücks 23 eindrückt. Für die Betätigung des Stößels 25 parallel zu der Führung 5 ist in der Vorrichtung ein bekannter Mechanismus vorgesehen, auf den in diesen Zusammenhang nicht näher eingegangen zu werden braucht. Jedenfalls ist dieser Mechanismus in der Vorrichtung innerhalb der Seitenwände 6 untergebracht, womit die Kompaktheit der Vorrichtung aufrechterhalten ist.

Nach dem Setzen des Bauteils gemäß Figur 6 wird die Vorrichtung von dem Werkstück 23 weggeführt und die Schiene 7 gegenüber der Führung 5 zurückgezogen, was, wie im Zusammenhang mit der Figur 2 beschrieben, mittels der Griffe 11 erfolgt. Bei diesem Zurückziehen der Schiene 7 (Pfeil in Fig. 7 und 8) wird das Aufnahmeteil 9 mittels der Rundung 19 zurückgeschwenkt (siehe teilweise zurückgeschwenkte Lage gemäß Figur 7). Mit dem weiteren Zurückziehen der Schiene 7 gelangt schließlich das Aufnahmeteil 9 wieder in seine mit der Schiene 7 fluchtende Lage (Figur 8), wobei schließlich das Bauteil 15 gegen den Anschlag 16 stößt, wodurch die von der Schiene 7 getragenen Bauteile nach rechts hin verschoben werden, bis schließlich wieder die Position gemäß Figur 3 erreicht wird, in der das am weitesten rechts befindliche Bauteil (Bauteil 27) in das Aufnahmeteil 9 eingeschoben wird, woraufhin ein neuer Setzvorgang, wie an Hand der Figuren 5 und 6 beschrieben, vorgenommen werden kann.

Aus der Schnittzeichnung gemäß Figur 9 (Schnitt gemäß der Linie IX-IX aus Figur 3) ist die Verschachtelung der Seitenwände 6 mit der Führung 5 und der Schiene 7 ersichtlich, wobei auch in der Figur 9 der Stößel 25 eingezeichnet ist. Bei seiner Betätigung durchsetzt der Stößel 25 das in Figur 2 und 10 eingezeichnete Loch 28 in dem Aufnahmeteil 9. Aus Figur 9 ist weiterhin ersichtlich, daß die Bauteile 8 durch ihre Vorsprünge 29 in entsprechenden Längsnuten 30 in der Schiene 7 geführt werden und somit am Herausfallen aus der Schiene 7 gehindert sind.

Die Schnittzeichnung gemäß Figur 10 (Schnitt gemäß der Linie X-X aus Figur 3), in der die Schiene 7 und die Führung 5 weggelassen sind, zeigt eine Halterung der Bauteile 8 in dem Aufnahmeteil 9, die hier durch Klemmittel 31 in dem Aufnahmeteil 9 gehalten werden.

Figur 11 zeigt eine andere Halterung der Bauteile 8, die durch Klemmittel 34 am Bauteil 8 gebildet ist.

Gemäß dem in den Figuren 4, 5 und 6 dargestellten Ausführungsbeispiel ist der Bereich der Führung 5, der mit der Rundung 19 versehen ist, als Magnet 32 ausgebildet. Dieser Magnet 32 wirkt als Artierungseinrichtung, die das Aufnahmeteil 9 in der in Figur 5 dargestellten Ausstoßposition lösbar festhält. Nach dem die Vorrichtung diese Position eingenommen hat, kann sie in allen möglichen Lagen hin- und herbewegt werden, wobei natürlich die Schwerkraft auf das Aufnahmeteil 9 einwirkt, ohne daß dieses dabei aus seiner Ausstoßposition verlagert werden kann. Darüberhinaus bewirkt der Magnet 32, daß beim Verschieben der Schiene 7 (gem. Pfeilrichtung aus Figur 4), also bei der Bewegung gem. den Figuren 4 und 5, das Aufnahmeteil 9 ständig gegen die Rundung 19 gezogen wird, also bei einer durch die Schwerkraft begünstigten Lage nicht von der Schiene 7 weggezogen werden kann. Das Aufnahmeteil 9 folgt dabei der Rundung 19 unab-hängig von einer gleichzeitigen Bewegung der Vorrichtung, wobei sich das Aufnahmeteil 9 ständig an die Rundung 19 anschmiegt, bis schließlich die in Figur 5 dargestellte Ausstoßposition des Aufnahmeteils 9 erreicht ist. Selbstverständlich ist es auch möglich, an Stelle des Magneten irgendeinen anderen Kraftspeicher, z. B. eine Feder zu verwenden.

## Patentansprüche

1. Vorrichtung zum Fördern und Montieren von in ein Werkstück (23) einzusetzenden Bauteilen (8), die in einer als Magazin dienenden Schiene (7) geführt sind, die an ihrem einen Ende für die Abnahme eines Bauteils (17) eine Öffnung (33) aufweist, wobei die Öffnung (33) in ein über ein Gelenk (10) mit der Schiene (7) verbundenes und mit dieser fluchtendes Aufnahmeteil (9) für ein einziges Bauteil (17) übergeht und die Schiene (7) mit dem Aufnahmeteil (9) längsverschiebbar in einer Führung (5) gelagert ist, in der das Aufnahmeteil (9) zur Aufnahme eines Bauteils (17) in zurückgeschobener Position der Schiene (7) in mit der Schiene (7) fluchtender Aufnahmeposition gehalten ist, wobei das Aufnahmeteil (9) so angeordnet ist, dass beim Vorschieben der Schiene (7) das Aufnahmeteil (9) mit dem Bauteil (17) aus der Führung (5) herausragt und durch das Gelenk (10) um etwa 90° in eine Ausstoßposition abknickt, in der das Bauteil (17) für seine Montage durch einen neben der Führung (5) angeordneten Stößel (25) aus dem Aufnahmeteil (9) ausstoßbar und in einem Werkstück (23) montierbar ist.

2. Vorrichtung nach Anspruch 1, **dadurch gekennzeichnet, daß** nach erfolgtem Montieren eines Bauteils (17) die Bauteile (8) in der Schiene (7) bei deren Zurückschieben von einem Anschlag (16) aufgehalten werden, der die Bauteile (8) in Richtung zur Öffnung (33) der Schiene (7) drückt, wobei das Aufnahmeteil (9) aus der Ausstoßposition in seine mit der Schiene (7) fluchtende Aufnahmeposition durch ein an der Öffnung (33) angebrachtes Umlenkteil (19) zurückgeschwenkt wird, das beim Vorschieben der Schiene (7) das Abknicken des Aufnahmeteils (9) in die Ausstoßposition lenkt.

3. Vorrichtung nach Anspruch 1 oder 2, **dadurch gekennzeichnet, daß** die Bauteile (8) in seitlichen Längsnuten (30) in der Schiene (7) geführt sind, in die Vorsprünge (29) des Bauteils (8) passen.

4. Vorrichtung nach Anspruch 3, **dadurch gekennzeichnet, daß** für das Halten des Bauteils (8) in der Ausstoßposition Klemmittel (31) am Aufnahmeteil (9) vorgesehen sind.

5. Vorrichtung nach Anspruch 3, **dadurch gekennzeichnet, daß** für das Halten der Bauteile (8) in der Austoßposition Klemmittel (34) am Bauteil (8) vorgesehen sind.

6. Vorrichtung nach Anspruch 1 bis 5, **dadurch gekennzeichnet, daß** an der Führung (5) eine Arretierungseinrichtung (32) angeordnet ist, die das Aufnahmeteil (9) in der Ausstoßposition lösbar festhält.

7. Vorrichtung nach Anspruch 6, **dadurch gekennzeichnet, daß** die Arretierungseinrichtung einen Magneten (32) enthält.

8. Vorrichtung nach einem der Ansprüche 2 bis 6, **dadurch gekennzeichnet, daß** im Bereich des Aufnahmeteils (9) und des Umlenkteils (19) ein Magnet (32) vorgesehen ist, der das Aufnahmeteil (9) gegen das Umlenkteil (19) zieht.

## Claims

1. Device for conveying and mounting components (8) which are to be inserted in a workpiece (23) and are guided along a rail (7) serving as a magazine and provided at one end with an opening (33) for the removal of a component (17), the opening (33) merging into a receiving part (9) for one single component (17) connected by means of a hinge (10) to the rail (7) and aligned therewith and the rail (7) with the receiving part (9) being mounted in a longitudinally displaceable manner in a guide (5) in which the receiving part (9) is held in a receiving position aligned with the rail (7) in the retracted position of the rail (7) in order to receive a component (17), the receiving part (9) being arranged in such a manner that, when the rail (7) is pushed forward, the receiving part (9) with the component (17) projects from the guide (5) and is bent through approximately 90° by the hinge (10) into an ejection position in which, for mounting, the component (17) can be ejected from the receiving part (9) by a ram (25) arranged alongside the guide (5) and mounted in a workpiece (23).

2. Device according to claim 1, **characterised in that**, once a component (17) has been mounted, when the rail (7) is retracted, the components (8) in the rail (7) are stopped by a stop (16) which presses the components (8) in the direction of the opening (33) in the rail (7), the receiving part (9) being pivoted out of the ejection position back into its receiving position aligned with the rail (7) by a deflector part (19) which is disposed at the opening (33) and guides the receiving part (9) into the ejection position when the rail (7) is pushed forward.

3. Device according to claim 1 or claim 2, **characterised in that** the components (8) are guided in lateral longitudinal grooves (30) in the rail (7) into which projections (29) of the component (8) fit.

4. Device according to claim 3, **characterised in that** clamping means (31) are provided on the receiving part (9) in order to hold the component (8) in the ejection position.

5. Device according to claim 3, **characterised in that** clamping means (34) are provided on the component (8) in order to hold the components (8) in the ejection position.

6. Device according to claims 1 to 5, **characterised in that** a locking device (32) which holds the receiving part (9) releasably in the ejection position is arranged on the guide (5).

7. Device according to claim 6, **characterised in that** the locking device contains a magnet (32).

8. Device according to one of claims 2 to 6, **characterised in that** a magnet (32) is provided in the region of the receiving part (9) and the deflector part (19) and pulls the receiving part (9) towards the deflector part (19).

## Revendications

1. Dispositif pour amener et poser des éléments structurels (8) à insérer dans une pièce (23), lesquels sont guidés dans une glissière (7) servant de magasin qui, à l'une de ses extrémités, comporte une ouverture (33) pour le prélèvement d'un élément structurel (17), l'ouverture (33) débouchant sur une partie de réception (9) destinée à un seul élément structurel, reliée à la glissière (7) par une articulation (10) et disposée dans l'alignement de la glissière (7), et la glissière (7) avec la partie de réception (9) étant montée avec une possibilité de coulissement longitudinal dans un moyen de guidage (5), dans lequel, dans la position rentrée de la glissière (7), la partie de réception (9) est maintenue, pour recevoir un élément structurel (17), dans une position de réception alignée avec la glissière (7), la partie de réception (9) étant disposée de façon que, lors de la sortie de la glissière (7), la partie de réception (9) avec l'élément structurel (17) dépasse du moyen de guidage (5) et, grâce à l'articulation (10), bascule à environ 90° dans une position d'éjection où l'élément structurel (17) peut, pour sa pose, être éjecté de la partie de réception (9) par un poussoir (25) disposé à côté du moyen de guidage (5) et être posé dans une pièce (23).

2. Dispositif selon la revendication 1, **caractérisé en ce que**, à l'issue de la pose d'un élément structurel (17), les éléments structurels (8) disposés dans la glissière (7) sont arrêtés, lors du recul de celle-ci, par une butée (16) qui pousse les éléments structurels (8) en direction de l'ouverture (33) de la glissière (7), la partie de réception (9) étant ramenée de la position d'éjection à sa position de réception, alignée avec la glissière (7), par l'intermédiaire d'une pièce de déviation (19) qui est placée au niveau de l'ouverture (33) et qui, lors de la sortie de la glissière (7), dirige le mouvement basculant de la partie de réception (9) vers la position d'éjection.

3. Dispositif selon la revendication 1 ou 2, **caractérisé en ce que** les éléments structurels (8) sont guidés dans des rainures longitudinales latérales (30) qui sont ménagées dans la glissière (7) et dans lesquelles s'engagent des saillies (29) de l'élément structurel (8).

4. Dispositif selon la revendication 3, **caractérisé en ce que** des moyens de serrage (31) sont prévus sur la partie de réception (9) pour maintenir l'élément structurel (8) dans la position d'éjection.

5. Dispositif selon la revendication 3, **caractérisé en ce que** des moyens de serrage (34) sont prévus sur l'élément structurel (8) pour maintenir les éléments structurels (8) dans la position d'éjection.

6. Dispositif selon la revendication 1 à 5, **caractérisé en ce que** sur le moyen de guidage (5) est disposé un dispositif d'arrêt (32) qui immobilise la partie de réception (9) de manière détachable dans la position d'éjection.

7. Dispositif selon la revendication 6, **caractérisé en ce que** le dispositif d'arrêt contient un aimant (32).

8. Dispositif selon une des revendications 2 à 6, **caractérisé en ce que** dans la zone de la partie de réception (9) et de la pièce de déviation (19) est prévu un aimant (32) qui attire la partie de réception (9) contre la pièce de déviation (19).
